(19) Europäisches Patentamt

European Patent Office

Office européen des brevets

(11) **EP 1 407 538 B1**

(12) **EUROPÄISCHE PATENTSCHRIFT**

(45) Veröffentlichungstag und Bekanntmachung des Hinweises auf die Patenterteilung:
**20.12.2006 Patentblatt 2006/51**

(21) Anmeldenummer: **02752997.3**

(22) Anmeldetag: **08.07.2002**

(51) Int Cl.:
*H02P 27/16* (2006.01)      *H02P 3/18* (2006.01)
*H02M 5/27* (2006.01)

(86) Internationale Anmeldenummer:
**PCT/DE2002/002508**

(87) Internationale Veröffentlichungsnummer:
**WO 2003/009462 (30.01.2003 Gazette 2003/05)**

(54) **VERFAHREN UND VORRICHTUNG ZUM STILLSETZEN EINES ANTRIEBS MIT EINEM MATRIXUMRICHTER BEI NETZAUSFALL**

METHOD AND DEVICE FOR SHUTTING DOWN A DRIVE COMPRISING A MATRIX CONVERTER, DURING A MAINS FAILURE

PROCEDE ET DISPOSITIF POUR ARRETER UN ENTRAINEMENT A CONVERTISSEUR MATRICIEL EN CAS DE PANNE DE COURANT

(84) Benannte Vertragsstaaten:
**DE FR GB IT**

(30) Priorität: **19.07.2001 DE 10135337**

(43) Veröffentlichungstag der Anmeldung:
**14.04.2004 Patentblatt 2004/16**

(73) Patentinhaber: **SIEMENS AKTIENGESELLSCHAFT**
**80333 München (DE)**

(72) Erfinder: **SCHIERLING, Hubert**
**91052 Erlangen (DE)**

(56) Entgegenhaltungen:
**DE-U- 20 004 437**

EP 1 407 538 B1

**Beschreibung**

Die Erfindung bezieht sich auf ein Verfahren zum Stillsetzen eines Antriebs mit einem Matrixumrichter bei Netzausfall mit mehreren netzseitigen Kommutierungskondensatoren, einer netzseitigen Schaltereinheit und einer Widerstandseinheit und auf eine Vorrichtung zur Durchführung des Verfahrens.

Bei manchen Antriebsapplikationen, wie z.B. bei Aufzugsanlagen, möchte man den bzw. die Antriebe bei einem Netzausfall noch definiert und sicher stillsetzen können. Bei Antrieben, die einen Spannungszwischenkreis-Umrichter aufweisen, genügt die Installation eines entsprechend dimensionierten Pulswiderstandes im Spannungszwischenkreis. D.h., ein solcher Pulswiderstand wird elektrisch parallel zum Zwischenkreiskondensator geschaltet. Dieser Pulswiderstand weist eine Reihenschaltung eines abschaltbaren Halbleiterschalters und eines Widerstandes auf. In Abhängigkeit der Bremsleistung vom Motor wird durch gepulste Ansteuerung des abschaltbaren Halbleiterschalters die Spannung am Widerstand im Mittel so geregelt, dass die im Widerstand umgesetzte Leistung der augenblicklichen Bremsleistung des Motors entspricht.

Neben der Umrichter-Topologie "Spannungszwischenkreis" existiert unter anderem auch noch eine weitere Topologie wie z.B. die Umrichter-Topologie "Matrixumrichter", wie er z.B. aus der DE 200 04 437 bekannt geworden ist. Ein derartiger Matrixumrichter wird über ein optionales Netzfilter bzw. EMV-Filter an ein speisendes Netz angeschlossen. Dieses Netzfilter wird beispielsweise aus Leitungsdrosseln und Kommutierungskondensatoren, die an den Eingangsklemmen des Matrixumrichters angeschlossen sind, realisiert. Die Kommutierungskondensatoren, die in Dreieck oder Stern geschaltet sein können, sind für den Betrieb des Matrixumrichters unerlässlich.

Auf die in den Zuleitungen eingefügten Drosseln kann unter Umständen verzichtet werden.

Da der Matrixumrichter keinen Spannungszwischenkreis aufweist, besteht auch nicht die Möglichkeit einen bekannten Pulswiderstand für die Stillsetzung eines Antriebs mit einem Matrixumrichter zu verwenden. Da einige Antriebsapplikationen eine sichere Stillsetzung verlangen, können bei diesen Antriebsapplikationen keine Matrixumrichter zur Speisung der Motoren verwendet werden. Somit verschließen sich einige Antriebsapplikationen der Umrichter-Topologie "Matrixumrichter".

Der Erfindung liegt nun die Aufgabe zugrunde, ein Verfahren und eine Vorrichtung zum Stillsetzen eines Antriebs mit einem Matrixumrichter bei Netzausfall anzugeben.

Diese Aufgabe wird erfindungsgemäß mit den Merkmalen des Anspruchs 1 oder 2 bzw. 7 oder 8 gelöst.

Eine Voraussetzung für das erfindungsgemäße Verfahren ist eine bedienbare Trennstelle zwischen dem speisenden Netz und den Eingängen des Matrixumrichters. Diese Trennstelle muss bei einem ermittelten Netzausfall umgehend geöffnet werden, damit der Matrixumrichter weiter betrieben werden kann.

Mit Hilfe dieses erfindungsgemäßen Verfahrens kann die Bremsenergie des vom Matrixumrichter gespeisten Motors ähnlich wie bei einem Spannungszwischenkreis-Umrichter auch in einer Widerstandseinheit in Wärme umgewandelt werden. Durch das erfindungsgemäße Verfahren wird eine an der Widerstandseinheit anstehende Spannung im Mittel so geregelt, dass die in der Widerstandseinheit umgesetzte Leistung der augenblicklichen Bremsleistung des Motors entspricht. Für die Einstellung der Spannung an der Widerstandseinheit weist dieser wenigstens einen abschaltbaren Halbleiterschalter auf. Mittels dieses erfindungsgemäßen Verfahrens kann der bekannte Pulswiderstand mit dem Matrixumrichter verknüpft werden.

Wird als Widerstandseinheit eine Reihenschaltung eines Widerstandes und eines Schützes verwendet, wobei diese Widerstandseinheit mit ihren Anschlüssen zwischen zwei Phasen des Matrixumrichters angeschlossen ist, so wird der Widerstand dieser Widerstandseinheit nicht getaktet, sondern ist fest zwischen zwei Phasen zugeschaltet. Dadurch ist die Eingangsspannung des Matrixumrichters im Bremsbetrieb nicht netzfrequent, sondern eine Gleichspannung. Diese Gleichspannung am Widerstand wird über die Winkellage der Eingangsspannung des Matrixumrichters eingestellt. Das Drehen der Eingangsspannung geschieht mittels der Regelung des eingangsseitigen Blindstroms des Matrixumrichters.

Bei diesem vorteilhaften Verfahren wird der Matrixumrichter selbst zur Einstellung der Spannung an der Widerstandseinheit benutzt, wodurch keine zusätzlichen abschaltbaren Halbleiterschalter benötigt werden. Dadurch ist der Eingriff in der Steuer- und Regeleinheit des Matrixumrichters minimal und die Widerstandseinheit weist nur einen einzigen Widerstand auf, der mittels eines einfachen Schützes zwischen zwei Eingangsphasen des Matrixumrichters geschaltet wird.

Eine erfindungsgemäße Vorrichtung zur Durchführung des erfindungsgemäßen Verfahrens weist jeweils eine Einrichtung zur Erfassung eines Kondensatorspannungs- und eines Netzspannungs-Istraumzeigers, einen Spannungsregelkreis, eine Netzspannungsüberwachungseinrichtung, einen Umschalter und eine Ablaufsteuereinrichtung auf. Außerdem weist diese Vorrichtung eine Widerstandseinheit auf, die getaktet wird. Die genannten Einrichtungen werden zur Zustandserfassung des Netzes und des Matrixumrichters benötigt, wobei die Einrichtung zur Erfassung des Netzspannungs-Istraumzeigers lediglich als Initialeinrichtung für den Bremsbetrieb vorgesehen ist. Der Einrichtung zur Erfassung des Netzspannungs-Istraumzeigers ist die Netzspannungsüberwachungseinrichtung nachgeschaltet, die ausgangsseitig mit einem Eingang der Ablaufsteuereinrichtung verknüpft ist. Ausgangsseitig ist diese Ablaufsteuereinrichtung mit einem Steuereingang des Umschalters, mit dem Spannungsregelkreis und mit der Schaltereinheit verbunden. Der Spannungsregelkreis ist eingangsseitig mit dem Amplituden-Ausgang der Einrichtung zur Erfassung des Kondensatorspannungs-Istraumzeigers und ausgangsseitig mit einem Steuereingang der Widerstandeinheit verknüpft. Mittels dieser Vorrichtung kann das erfindungsgemäße Verfahren durchgeführt werden, wobei diese Vorrichtung zusätzlich nur den Spannungsregelkreis mit der zuschaltbaren Widerstandseinheit, einen Umschalter, eine Schaltereinheit und eine Ablaufsteuereinrichtung aufweist.

Bei einer vorteilhaften Vorrichtung ist der Spannungsregelkreis ausgangsseitig mit einem Steuereingang der Steuer- und Regeleinrichtung des Matrixrichters verbunden, an dem im Normalbetrieb eine Stellgröße ansteht, mit der der eingangsseitige Blindstrom des Matrixumrichters eingestellt werden kann. Außerdem weist die zuschaltbare Widerstandseinheit nur einen Widerstand und ein Schütz auf. Diese Widerstandseinheit ist zwischen zwei Eingangsphasen des Matrixrichters geschaltet. Durch die Verwendung des Stellgrößeneingangs für den eingangsseitigen Blindstrom der Steuer- und Regeleinrichtung des Matrixumrichters vereinfacht sich die Widerstandseinheit erheblich. Außerdem werden keine zusätzlichen abschaltbaren Halbleiterschalter benötigt.

Zur weiteren Erläuterung der Erfindung wird auf die Zeichnung Bezug genommen, in der mehrere Ausführungsbeispiele einer Vorrichtung zur Durchführung des erfindungsgemäßen Verfahrens zum Stillsetzen eines Antriebs mit einem Matrixumrichter bei Netzausfall schematisch veranschaulicht sind.

FIG 1   zeigt ein Blockschaltbild eines Matrixrichters mit einer Widerstandseinheit, die

FIG 2   zeigt eine erste Ausführungsform der Widerstandseinheit nach FIG 1, in der

FIG 3   ist eine zweite Ausführungsform der Widerstandseinheit nach FIG 1 dargestellt, wobei in der

FIG 4   eine dritte Ausführungsform der Widerstandseinheit nach FIG 1 veranschaulicht ist, die

FIG 5   zeigt ein Signalflussplan einer ersten Regelung eines Matrixumrichters mit einer Widerstandseinheit, in

FIG 6   ist ein Signalflussplan einer zweiten Regelung eines Matrixumrichters mit einer Widerstandseinheit dargestellt, die

FIG 7   zeigt eine weitere Ausführungsform der Widerstandseinheit nach FIG 1, und in der

FIG 8   ist ein Signalflussplan einer vorteilhaften Regelung eines Matrixumrichters mit einer Widerstandseinheit nach FIG 7 dargestellt.

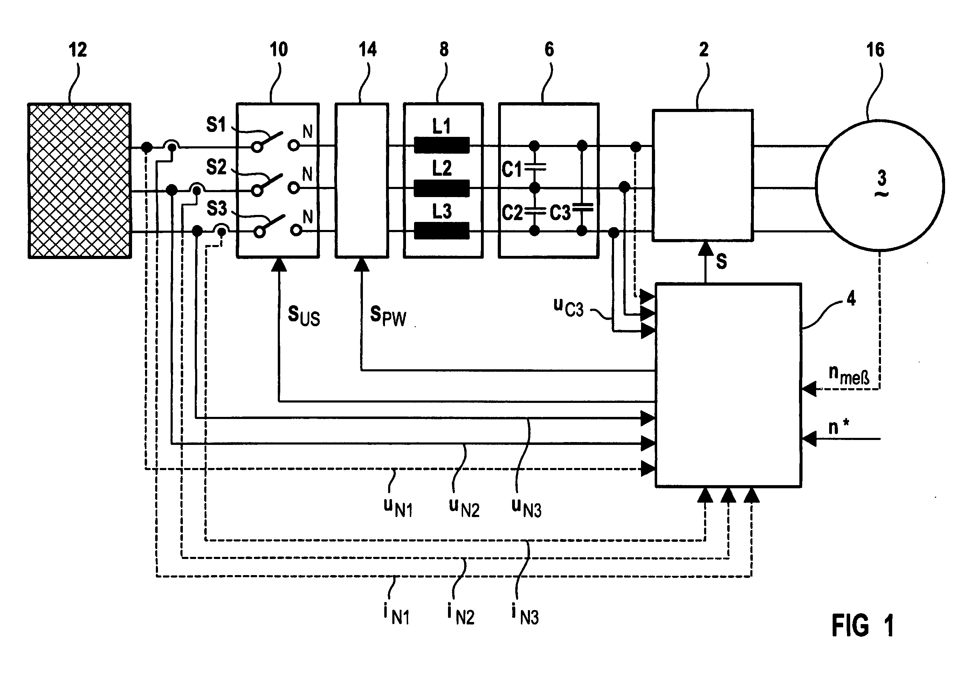

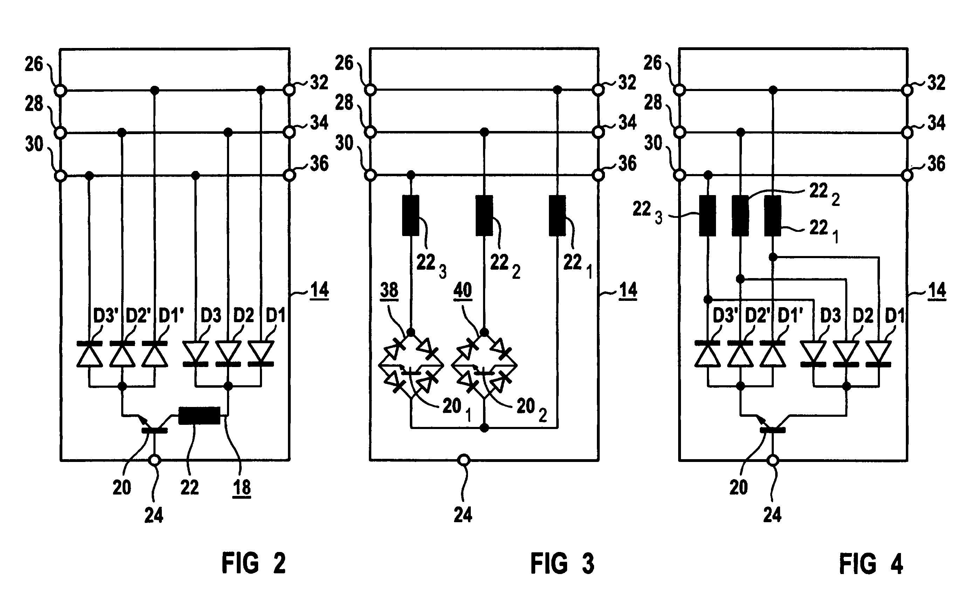

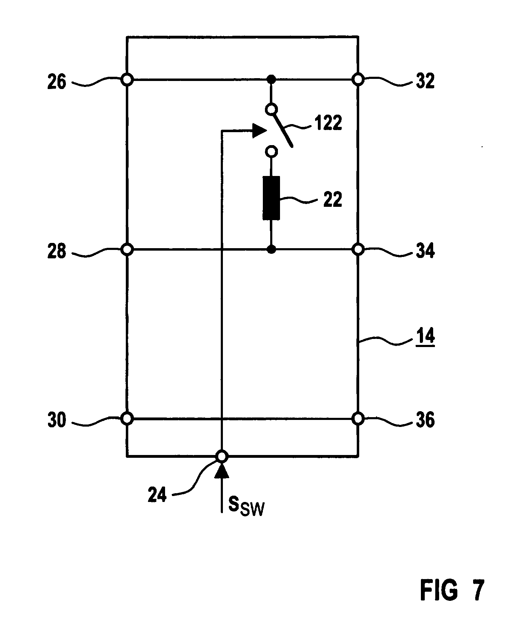

Im Blockschaltbild gemäß FIG 1 sind mit 2 ein Matrixumrichter, mit 4 eine zugehörige Steuer- und Regeleinrichtung, mit 6 eine Kommutierungskondensatorschaltung, mit 8 eine Drosselschaltung, mit 10 eine Schaltereinheit, mit 12 ein speisendes Netz, mit 14 eine Widerstandseinheit und mit 16 ein anzutreibender Motor bezeichnet. Der Matrixumrichter 2 ist ausgangsseitig mit Anschlüssen des Motors 16 und eingangsseitig mit der Kommutierungskondensatorschaltung 6 verknüpft. Diese Kommutierungskondensatorschaltung 6 weist drei Kommutierungskondensatoren C1, C2 und C3 auf, die hier in Dreieck geschaltet sind. Diese Kommutierungskondensatoren C1, C2 und C3 können auch in Stern geschaltet werden. Dieser Kommutierungskondensatorschaltung 6 ist die Drosselschaltung 8 vorgeschaltet, die eingangsseitig mittels der Schaltereinheit 10 mit dem speisenden Netz 12 verbindbar ist. Die Drosselschaltung 8 weist drei Induktivitäten L1, L2 und L3 auf, die jeweils in einer Zuleitung angeordnet sind. Die Schaltereinheit 10 weist drei Schalter S1, S2 und S3 auf, mit denen die Zuleitungen vom speisenden Netz 12 zur Drosselschaltung 8 aufgetrennt werden können. Die Widerstandseinheit 14 ist eingangsseitig mit den Ausgängen der Schaltereinheit 10 und ausgangsseitig mit den Eingängen der Drosselschaltung 8 verbunden. Diese Widerstandseinheit 14 kann auch zwischen der Drosselschaltung 8 und der Kommutierungskondensatorschaltung 6 angeordnet werden. Ausführungsformen dieser Widerstandseinheit 14 sind in den FIG 2 bis 4 und 7 dargestellt, wobei bei der Verwendung der Widerstandseinheit 14 gemäß der Ausführungsform nach FIG 7 die Steuer- und Regeleinrichtung 4 in der Lage sein muss, den eingangsseitigen Blindstrom des Matrixumrichters 2 zu regeln.

Der Steuer- und Regeleinrichtung 4 des Matrixumrichters 2 sind wenigstens zwei gemessene Netzphasenspannungen $u_{N2}$ und $u_{N3}$ zugeführt. Es kann auch noch die gemessene Netzphasenspannung $u_{N1}$ zugeführt werden. Außerdem werden dieser Steuer- und Regeleinrichtung 4 Kondensatorspannungen $u_{C1}$, $U_{C2}$ und $U_{C3}$ zugeführt. Ferner stehen an zwei weiteren Eingängen ein gemessener Drehzahl-Istwert $n_{meß}$ und ein vorbestimmter Drehzahl-Sollwert n* an. Ausgangsseitig ist diese Steuer- und Regeleinrichtung 4 mittels Steuerleitungen mit Steuereingängen des Matrixumrichters 2, mit der Widerstandseinheit 8 und mit der Schaltereinheit 10 verknüpft. Die Kondensatorspannungen $u_{C1}$, $U_{C2}$ und $U_{C3}$ werden an den Eingängen des Matrixumrichters 2 gemessen, die somit die Eingangsspannungen des Matrixumrichters 2 darstellen. Die Drosselschaltung 8 und die Kommutierungskondensatorschaltung 6 bilden zusammen ein Netzfilter. Ferner können dieser Steuer- und Regeleinrichtung 4 gemessene Netzströme $i_{N1}$, $i_{N2}$ und $i_{N3}$ zugeführt werden, die dann benötigt werden, wenn der eingangsseitige Blindstrom geregelt werden soll. Diese Option ist dadurch gekennzeichnet, dass die zugehörigen Signalleitungen jeweils mit einer unterbrochenen Linie dargestellt sind.

Im Normalbetrieb, der durch ein N gekennzeichnet ist, sind die Schalter S1, S2 und S3 der Schaltereinheit 10 geschlossen. D.h., diese Schalter S1, S2 und S3 sind in der Stellung N geschaltet. Als Schalter S1, S2 und S3 sind jeweils schnelle Schalter vorzusehen, damit bei einem Netzausfall der Matrixumrichter 2 umgehend vom Netz 12 getrennt werden kann. Als schneller Schalter S1, S2 und S3 können Halbleiterschütze vorgesehen sein. Durch diese schnelle Trennung des Matrixumrichters 2 mit der eingangsseitigen Kommutierungskondensatorschaltung 6 wird erreicht, dass der Matrixumrichter 2 ohne große Unterbrechung weiterbetrieben werden kann. Somit entspricht ein ermittelter Kondensatorspannungs-Istraumzeiger $\underline{u}_{Cme\beta}$ kurz vor einem Netzausfall einem ermittelten Kondensatorspannungs-Istraumzeiger $\underline{u}_{Cme\beta}$ kurz nach der Trennung. D.h., in Verbindung mit den schnellen Schaltern S1, S2 und S3 hat sich der Eingangsspannungs-Istraumzeiger $\underline{u}_{Cme\beta}$ kurz nach der

Trennung nur unwesentlich gegenüber einem Eingangsspannungs-Istraumzeiger $\underline{u}_{Cme\beta}$ zum Zeitpunkt kurz vor der Trennung geändert. Dieser Eingangsspannungs-Istraumzeiger $\underline{u}_{Cme\beta}$ ist der Netzspannungs-Raumzeiger $\underline{u}_{netzme\beta}$ mit Nennamplitude $u_{Nenn}$.

Die FIG 2 zeigt eine erste Ausführungsform der Widerstandseinheit 14 nach FIG 1. Diese Widerstandseinheit 14 weist eine Reihenschaltung 18 eines abschaltbaren Halbleiterschalters 20 und eines Widerstandes 22 auf. Der Steueranschluss dieses abschaltbaren Halbleiterschalters 20 ist mit einem Steuereingang 24 der Widerstandseinheit 14 verbunden. Die Reihenschaltung 18, auch als Pulswiderstand bezeichnet, ist jeweils mit einem seiner beiden Anschlüsse mittels einer Diode D1, D2, D3 bzw. D1', D2', D3' mit einem Phasenleiter verbunden, der jeden Eingang 26, 28 und 30 der Widerstandseinheit 14 mit einem Ausgang 32, 34 und 36 der Widerstandseinheit 14 verknüpft. Durch diese Verknüpfung des Pulswiderstandes 18 mit den Phasenleitern steht am Widerstand 22 im Bremsbetrieb B eine regelbare netzfrequente Wechselspannung an. Da hier nur ein Widerstand 22 verwendet wird, wird im Bremsbetrieb die augenblickliche Bremsleistung des Motors nur in diesem Widerstand 22 in Leistung umgesetzt. Auch der dazugehörige Widerstandsstrom wird nur von dem einen abschaltbaren Halbleiterschalter 20 geführt.

In der FIG 3 ist eine dreiphasige Widerstandseinheit 14 dargestellt, die sich von der Widerstandseinheit 14 nach FIG 2 dadurch unterscheidet, dass anstelle eines Widerstandes 22 nun drei Widerstände $22_1$, $22_2$ und $22_3$ vorgesehen sind. Außerdem sind zwei abschaltbare Halbleiterschalter $20_1$ und $20_2$ vorgesehen, die jeweils mit den gleichspannungsseitigen Anschlüssen jeweils einer Diodenbrücke 38 und 40 verbunden sind. Diese Diodenbrücke 38 bzw. 40 weist vier Dioden auf, wobei ein erster wechselspannungsseitiger Anschluss mit einem Anschluss eines Widerstandes $22_3$ bzw. $22_2$ und ein zweiter wechselspannungsseitiger Anschluss mit einem Anschluss des Widerstandes $22_1$ verknüpft ist. Dadurch sind diese Widerstände $22_1$, $22_2$ und $22_3$ in Stern geschaltet. Somit teilt sich die anstehende Spannung jeweils auf zwei Widerstände $22_1$, $22_2$ oder $22_3$ auf. Außerdem wird bezogen auf eine Netzperiode nicht ständig Leistung in den einzelnen Widerständen umgesetzt.

In der FIG 4 ist eine weitere dreiphasige Ausführungsform der Widerstandseinheit 14 dargestellt, die sich von der dreiphasigen Ausführungsform nach FIG 3 dadurch unterscheidet, dass anstelle der Diodenbrücke 38 bzw. 40 nur drei Dioden D1, D2, D3 bzw. D1', D2', D3' verwendet werden. Gegenüber der dreiphasigen Anordnung nach FIG 3 werden weniger Bauelemente für diese Widerstandseinheit 14 benötigt.

Der Vorteil der beiden Ausführungsformen der Widerstandseinheit 14 nach den FIG 3 und 4 besteht darin, dass keine niederfrequenten Harmonischen, wie beispielsweise die 5. bzw. 7.

Harmonische, auftreten. Dadurch kann die Steuer- und Regeleinrichtung 4 ruhiger arbeiten, da durch die fehlenden Harmonischen der sinusförmige Verlauf der Spannung an der Widerstandseinheit 14 weniger verfälscht wird.

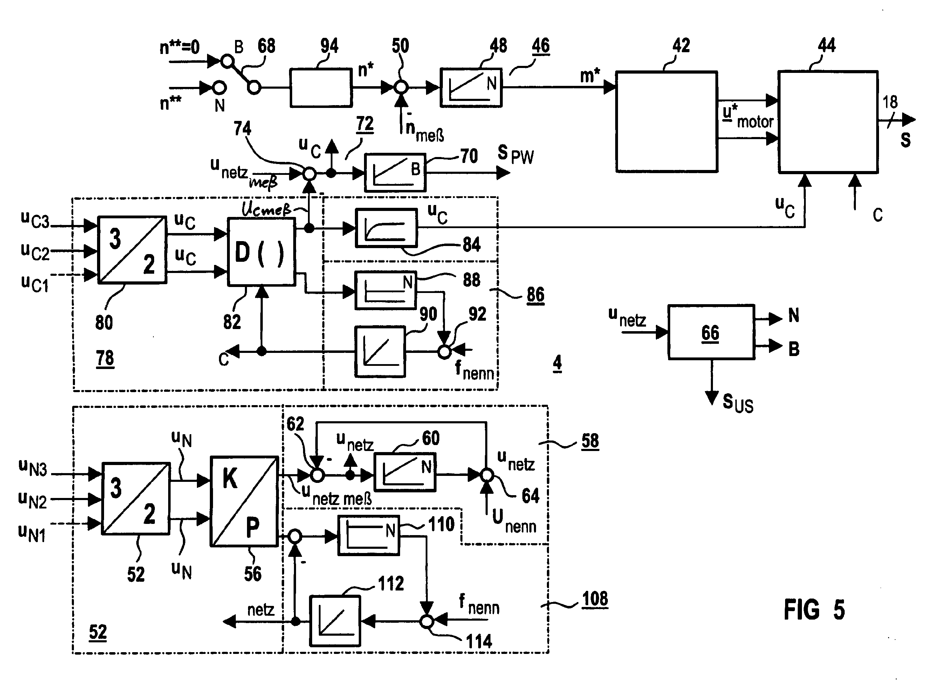

Die FIG 5 zeigt den Signalflussplan der Steuer- und Regeleinrichtung 4 nach FIG 1. Diese Steuer- und Regeleinrichtung 4 weist zunächst eine Regeleinheit 42 und eine Steuereinheit 44 auf. Der Regeleinheit 42 ist ein überlagerter Drehzahlregelkreis 46 vorgeschaltet, der dieser Regeleinheit 42 einen Drehmoment-Sollwert $m^*$ zuführt. Der Drehzahlregelkreis 46 besteht aus einem Drehzahlregler 48 und einem Vergleicher 50, der einen gemessenen Drehzahl-Istwert $n_{me\beta}$ mit einem vorbestimmten Drehzahl-Sollwert $n^*$ vergleicht. Außerdem weist diese Steuer- und Regeleinrichtung 4 eine Einrichtung 52 zum Erfassen eines Netzspannungs-Istraumzeigers $\underline{u}_{netzme\beta}$ auf. Die Einrichtung 52 zum Erfassen eines Netzspannungs-Istraumzeigers $\underline{u}_{netzme\beta}$ weist einen Koordinatenwandler 54 auf, dem ein weiterer Koordinatenwandler 56 nachgeschaltet ist. An den Eingängen des eingangsseitigen Koordinatenwandlers 54 der Einrichtung 52 stehen wenigstens zwei gemessene Werte $u_{N2}$, $u_{N3}$ an. Es ist auch möglich, dass alle drei gemessenen Netzphasenspannungen $u_{N1}$, $u_{N2}$, $u_{N3}$ dem eingangsseitigen Koordinatenwandler 54 zugeführt werden. Mittels dieses Koordinatenwandlers 54 wird ein Dreiphasensystem in ein orthogonales Zweiphasensystem gewandelt. An den beiden Ausgängen des Koordinatenwandlers 54 stehen die orthogonalen Komponenten $u_{N\alpha}$ und $u_{N\beta}$ eines mit der Netzfrequenz $f_N$ umlaufenden Netzspannungs-Istraumzeigers $\underline{u}_{netzme\beta}$ an. Mittels des nachgeschalteten weiteren Koordinatenwandlers 56 werden diese orthogonal umlaufenden Komponenten $u_{N\alpha}$ und $u_{N\beta}$ des Netzspannungs-Istraumzeigers $\underline{u}_{netzme\beta}$ in polare Komponenten Amplitude $u_{netz\,me\beta}$ und Phasenwinkel $\gamma_{netz}$ des Netzspannungs-Istraumzeigers $\underline{u}_{netzme\beta}$ gewandelt.

Damit ein Netzausfall ermittelt werden kann, ist der Einrichtung 52 eine Netzspannungsüberwachungseinrichtung 58 nachgeschaltet. Dabei ist der Amplituden-Ausgang der Einrichtung 52 zum Erfassen eines Netzspannungs-Istraumzeigers $\underline{u}_{netzme\beta}$ mit dem Eingang der Netzspannungsüberwachungseinrichtung 58 verknüpft. Diese Netzspannungsüberwachungseinrichtung 58 weist einen proportional-integral wirkenden Regler 60, auch als PI-Regler bezeichnet, einen Vergleicher 62 und einen Addierer 64 auf. Mittels dieser Überwachungseinrichtung 58 wird festgestellt, ob die Amplitude $u_{netz\,meß}$ des Netzspannungs-Istraumzeigers $\underline{u}_{netzmeß}$ unter eine vorbestimmte untere Toleranzgrenze fällt. Dazu wird eine Amplitudenabweichung $\Delta u_{netz}$ ermittelt, die einer Ablaufsteuereinrichtung 66 zugeführt wird. Übersteigt diese ermittelte Amplitudenabweichung $\Delta u_{netz}$ einen vorbestimmten Wert, schaltet die Ablaufsteuereinrichtung 66 von Normalbetrieb N auf Bremsbetrieb B um. Aufgrund einer positiven Feststellung wird mit einem Ausgangssignal der Ablaufsteuereinrichtung 66 in den Bremsbetrieb B gewechselt. D.h., der Umschalter 68 wird in die Stellung B geschaltet und alle mit B gekennzeichnete Regler werden frei gegeben.

Zu diesen mit B gekennzeichneten Reglern gehört hier nur ein Regler 70 eines Spannungsregelkreises 72. Der Spannungsregelkreis 72 weist neben den Regler 70 noch einen Vergleicher 74 auf, an dessen invertierenden Eingang die Amplitude $u_C$ des ermittelten Kondensatorspannungs-Istraumzeigers $\underline{u}_{Cmeß}$ und an dessen nichtinvertierenden Eingang der Amplitudenwert des ermittelten Netzspannungs-Istraumzeigers $u_{netz\,meß}$ anstehen.

Außerdem weist diese Steuer- und Regeleinrichtung 4 noch eine Einrichtung 78 zum Erfassen eines Kondensatorspannungs-Istraumzeigers $\underline{u}_{Cmeß}$ auf. Dieser Kondensatorspannungs-Istraumzeiger $\underline{u}_{Cmeß}$ wird aus gemessenen Kondensatorspannungen $u_{C2}$ und $u_{C3}$ bzw. $u_{C1}$, $u_{C2}$ und $u_{C3}$ mittels dieser Einrichtung 78 zum Erfassen eines Kondensatorspannungs-Istraumzeigers $\underline{u}_{Cmeß}$ in Abhängigkeit seines Phasenwinkels $\gamma_C$ ermittelt. Dazu weist diese Einrichtung 78 einen Koordinatenwandler 80 und einen Vektordreher 82 auf, der dem Koordinatenwandler 80 nachgeschaltet ist. Mittels dieses Koordinatenwandlers 80 werden aus den gemessenen Kondensatorspannungen $u_{C1}$, $u_{C2}$ und $u_{C3}$ zwei orthogonale umlaufende Spannungskomponenten $u_{C\alpha}$ und $u_{C\beta}$ generiert. Diese werden in Abhängigkeit des Phasenwinkels $\gamma_C$ des ermittelten umlaufenden Kondensatorspannungs-Istraumzeigers $\underline{u}_{Cmeß}$ in zwei ruhende polare Spannungskomponenten gewandelt. Die polare Komponente Amplitude wird mittels eines Glättungsfilters 84 geglättet. Die polare Komponente Phasenwinkel wird ebenfalls mittels eines Vektorphasenregelkreises 86 geglättet. Dieser Vektorphasenregelkreises 86 weist einen Regler 88, einen Integrator 90 und einen Addierer 92 auf. Am Addierer 92 steht außerdem ein Nennwert $f_{nenn}$ der Netzfrequenz $f_N$ an, damit sich der Phasenwinkel $\gamma_C$ entsprechend weiterverändert (umlaufender Zeiger). Diese geglätteten polaren Komponenten $u_C$ und $\gamma_C$ des Eingangsspannungs-Istraumzeigers $\underline{u}_{Cmeß}$ werden der Steuereinheit 44 zugeführt, die daraus Steuersignale $S_v$ für den Matrixumrichter 2 berechnet.

Ferner ist dem Umschalter 68 ein Rampengeber 94 nachgeschaltet, der ausgangsseitig mit einem invertierenden Eingang des Vergleichers 50 des Drehzahlregelkreises 46 verbunden ist. An den beiden Eingängen des Umschalters 68 steht einerseits ein Drehzahl-Sollwert n** und andererseits ein vorbestimmter Drehzahl-Sollwert n** = 0 an. Im Normalbetrieb, gekennzeichnet durch einen Buchstaben N, wird der Drehzahl-Sollwert n** dem Rampengeber 94 zugeführt, an dessen Ausgang dann ein geführter Drehzahl-Sollwert n* ansteht, der von Null auf einen vorbestimmten Wert gleichmäßig erhöht wird. Im Bremsbetrieb, gekennzeichnet durch einen Buchstaben B, wird der vorbestimmte Drehzahl-Sollwert n* = 0 auf den Eingang des Rampengenerators 94 gegeben, wodurch an seinem Ausgang der geführte Drehzahl-Sollwert n* von einem vorbestimmten Wert kontinuierlich auf Null abgesenkt wird. Gesteuert wird dieser Umschalter 68 von der Ablaufsteuereinrichtung 66. Diese Ablaufsteuereinrichtung 66 gibt, nachdem ein Netzausfall festgestellt worden ist, den Regler 70 des Spannungsregelkreises 72 frei. Am Eingang dieses Reglers 70 steht ein Ausgangssignal des Vergleichers 74 an, das gleich der Amplitude des ermittelten Kondensatorspannungs-Istraumzeigers $\underline{u}_{Cmeß}$ ist, jedoch mit entgegengesetztem Vorzeichen. Am Ausgang des Reglers 70 steht ein Signal $S_{PW}$ an, das dem Steuereingang 24 der Widerstandseinheit 14 zugeführt wird. Mittels dieses Steuersignals $S_{PW}$ wird der abschaltbare Halbleiterschalter 20 der Widerstandseinheit 14 derart gesteuert, dass eine am Widerstand 22 anstehende Spannung im Mittel so geregelt wird, dass die in dem Widerstand 22 umgesetzte Leistung der augenblicklichen Bremsleistung des Motors 16 entspricht. D.h., die Amplitude des ermittelten Kondensatorspannungs-Istraumzeigers $\underline{u}_{Cmeß}$ wird im

Bremsbetrieb B über den Pulswiderstand 18 geregelt. Wenn der Motor 16 steht, d.h., der gemessene Drehzahl-Istwert $n_{meß}$ gleich Null ist, wird der Antrieb abgeschaltet.

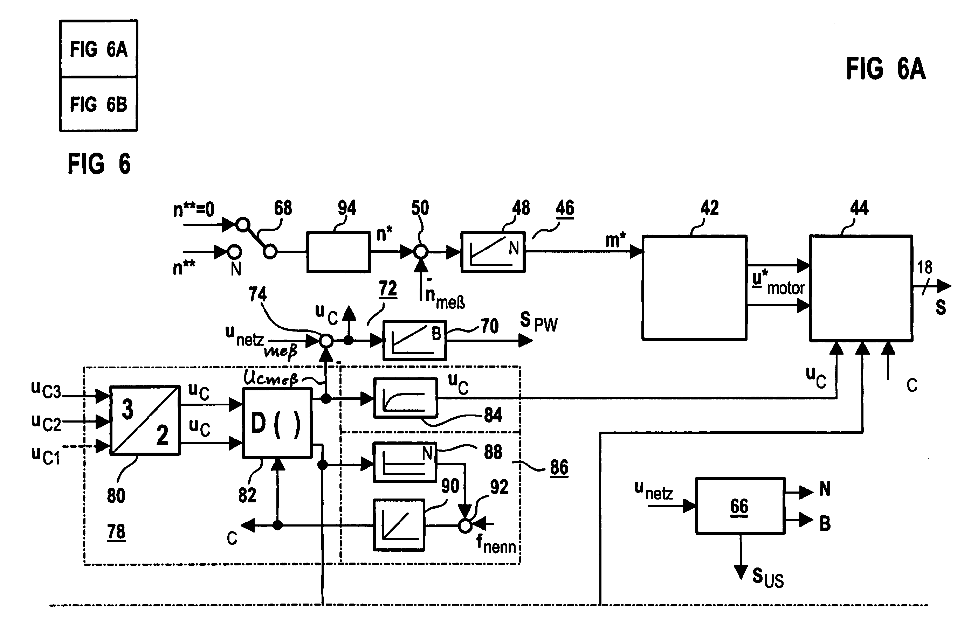

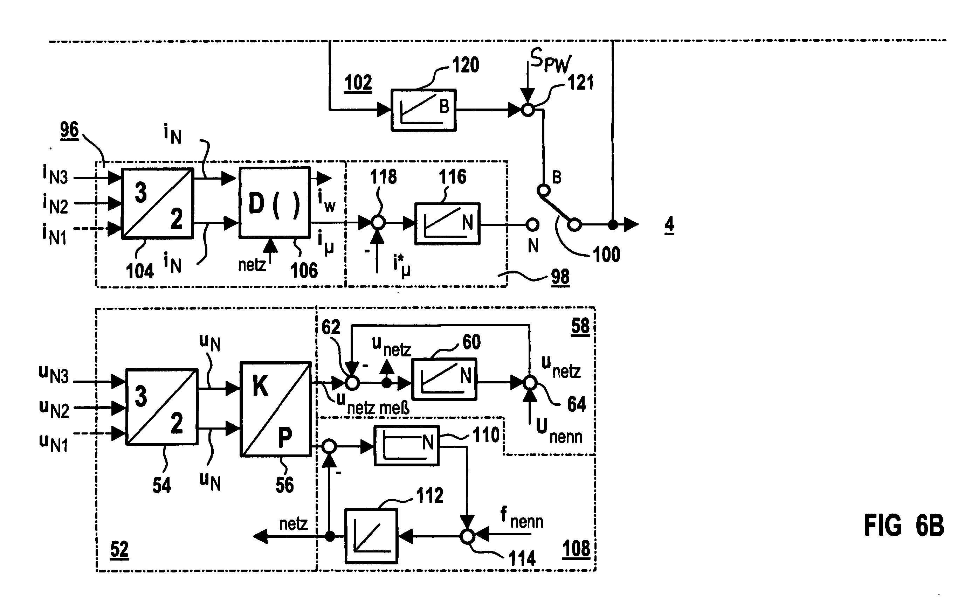

In der FIG 6 ist ein Signalflussplan einer zweiten Steuer- und Regeleinrichtung 4 eines Matrixumrichters 2 näher dargestellt. Dieser Signalflussplan unterscheidet sich vom Signalflussplan gemäß FIG 5 dadurch, dass zusätzlich eine Einrichtung 96 zum Erfassen eines Netzstrom-Istraumzeigers $\underline{i}_{netzmeß}$, ein Blindstromregelkreis 98, ein zweiter Umschalter 100 und ein Phasenwinkelregelkreis 102 vorgesehen sind. Voraussetzung zur Realisierung dieser Steuer- und Regeleinrichtung 4 ist, dass seine Steuereinheit 44 neben den Stellgrößeneingängen "Amplitude" und "Phasenwinkel" ebenfalls einen Steuereingang für die Stellgröße "Leistungsfaktor" aufweist. Mit diesem Steuereingang ist der Ausgang des zweiten Umschalters 100 verknüpft. Ein Eingang dieses Umschalters 100 ist mit dem Ausgang des Phasenregelkreises 102 und sein anderer Eingang mit dem Ausgang des Blindstromregelkreises 98 verknüpft, der eingangsseitig mit einem Blindstrom-Ausgang der Einrichtung 96 zum Erfassen eines Netzstrom-Istraumzeigers $\underline{i}_{netzmeß}$ verbunden ist.

Die Einrichtung 96 zum Erfassen eines Netzstrom-Istraumzeigers $\underline{i}_{netzmeß}$ weist eingangsseitig einen Koordinatenwandler 104 auf, dem ausgangsseitig ein Vektordreher 106 nachgeschaltet ist. Mit Hilfe dieses Koordinatenwandlers 104 werden aus den anstehenden gemessenen Netzphasenströmen $i_{N1}$, $i_{N2}$ und $i_{N3}$ zwei orthogonale Komponenten $i_{N\alpha}$ und $i_{N\beta}$ generiert.

Damit Schwankungen des Netzspannungs-Istraumzeigers $\underline{u}_{netzme\beta}$ nicht die Projektion des Netzstrom-Istraumzeigers $\underline{i}_{netzme\beta}$ auf den Netzspannungs-Istraumzeiger $\underline{u}_{netzme\beta}$ beeinflusst, wird der Phasenwinkel $\gamma_{netz}$ des Netzspannungs-Istraumzeigers $\underline{u}_{netzme\beta}$ mittels eines zweiten Vektorregelkreises 108 geglättet. Dieser zweite Vektorregelkreis 108 weist ebenfalls einen Regler 110, einen Integrator 112 und einen Addierer 114 auf. An einem Eingang des Addierers 114 steht der Nennwert $f_{nenn}$ der Netzfrequenz $f_N$ an. Der Phasenwinkel-Ausgang dieses Vektorregelkreises 108 zum Glätten eines Phasenwinkels $\gamma_{netz}$ eines Netzspannungs-Istraumzeigers $\underline{u}_{netzme\beta}$ ist mit einem Winkelstelleingang der Einrichtung 96 zum Erfassen eines Netzstrom-Istraumzeigers $\underline{i}_{netzme\beta}$ verknüpft.

Mit Hilfe dieser polaren Komponente Phasenwinkel $\gamma_{netz}$ des Netzspannungs-Istraumzeigers $\underline{u}_{netzme\beta}$ und des Vektordrehers 106 der Einrichtung 96 zum Erfassen eines Netzstrom-Istraumzeigers $\underline{i}_{netzme\beta}$ werden die beiden umlaufenden orthogonalen Stromkomponenten $i_{N\alpha}$ und $i_{N\beta}$ in zwei ruhende Stromkomponenten $i_W$ und $i_\mu$ eines mit dem umlaufenden Netzspannungs-Raumzeigers $\underline{u}_{netzme\beta}$ umlaufenden Koordinatensystem gewandelt. D.h., der Netzstrom-Istraumzeiger $\underline{i}_{netzme\beta}$ ist auf den Netzspannungs-Istraumzeiger $\underline{u}_{netzme\beta}$ abgebildet. Bei diesen beiden Stromkomponenten $i_W$ und $i_\mu$ handelt es sich um eine Komponente in Richtung des Netzspannungs-Raumzeigers $\underline{u}_{netzme\beta}$ und um eine Komponente senkrecht zur Richtung des Netzspannungs-Raumzeigers $\underline{u}_{netzme\beta}$. Aus diesen Gründen wird die Komponente $i_w$ als Wirkstrom und die Komponente $i_\mu$ als Blindstrom bezeichnet. Dieser ermittelte Blindstrom $i_\mu$ des Netzstrom-Istraumzeigers $\underline{i}_{netzme\beta}$ wird in dem nachgeschalteten Blindstromregelkreis 98 auf einen vorbestimmten Blindstrom-Sollwert $i^*_\mu$ geregelt. Dazu weist dieser Blindstromregelkreis 98 einen Regler 116 und einen Vergleicher 118 auf. Am invertierenden Eingang des Vergleichers 118 steht ein Blindstrom-Sollwert $\overset{\bullet}{i}_\mu$ an.

Der Phasenwinkelregelkreis 102 weist einen Regler 120 und eine Additionsstelle 121 auf. Mittels dieser Additionsstelle 121 wird ein Vorsteuerwert zur Entlastung des Reglers 120 hinzugefügt. Ausgangsseitig ist diese Additionsstelle 121 mit einem Eingang des Umschalters 100 verbunden. Am Eingang des Phasenwinkelregelkreises 102 steht ein Phasenwinkel $\gamma_C$ eines ermittelten Kondensatorspannungs-Istraumzeigers $\underline{u}_{Cme\beta}$ an.

Diese Steuer- und Regeleinrichtung 4 des Matrixumrichters 2 unterscheidet sich bezüglich des Verfahrens zum Stillsetzen eines Antriebs bei Netzausfall nicht von der Regel- und Steuereinrichtung 4 nach FIG 5. Der einzige Unterschied besteht darin, dass der Matrixumrichter 2 mit der Steuer- und Regeleinrichtung 4 gemäß FIG 6 auch noch den eingangsseitigen Blindstrom $i_\mu$ regeln kann. Diese Blindstromregelung hat jedoch keine Auswirkungen auf das Verfahren zum Stillsetzen eines Antriebs bei Netzausfall. In beiden Fällen wird die Spannung an der Widerstandseinheit 14 mittels des mit dem Spannungsregelkreis 72 generierten Steuersignals $S_{PW}$ im Mittel so geregelt, dass die in der Widerstandseinheit 14 umgesetzte Leistung der augenblicklichen Bremsleistung des Motors 16 entspricht, und wird der Drehzahl-Sollwert $n^*$ rampenförmig auf Null gefahren.

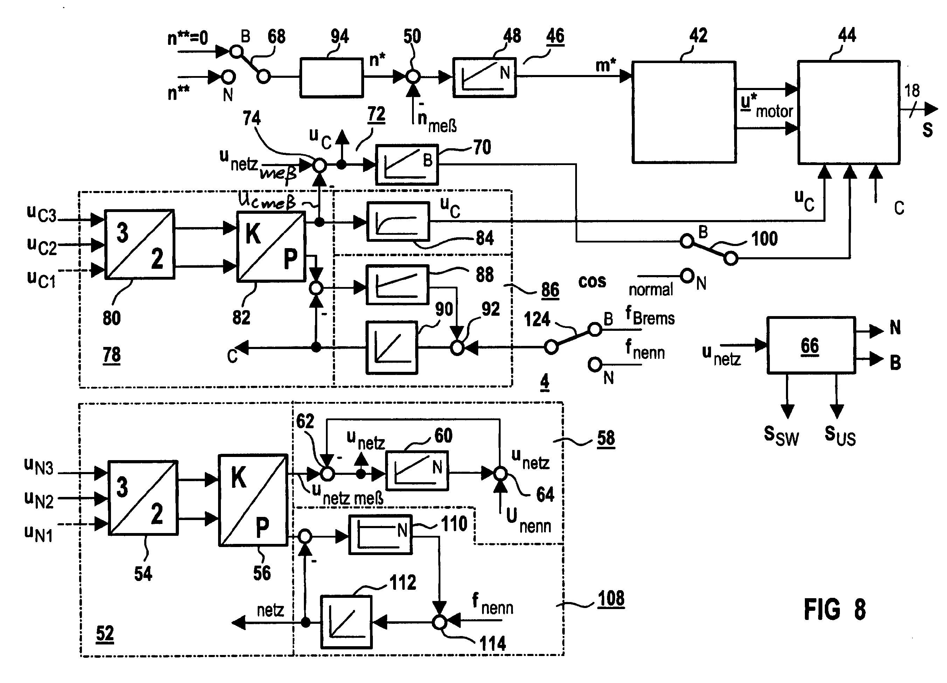

In der FIG 7 ist eine weitere Ausführungsform der Widerstandseinheit 14 näher dargestellt. Diese Widerstandseinheit 14 weist einen Widerstand 22 auf, der mittels eines Schützes 122 zwischen zwei Eingangs-Phasen des Matrixumrichters 2 geschaltet wird. Der Widerstand 22 dieser Widerstandseinheit 14 wird nicht getaktet, sondern ist für den Bremsbetrieb B nach einem Netzausfall zugeschaltet. Dadurch fällt am Widerstand 22 nur eine Gleichspannung und keine Wechselspannung ab, wodurch die Eingangsspannung des Matrixumrichters 2, d.h., der Kondensatorspannungs-Istraumzeiger $\underline{u}_{Cme\beta}$ im Bremsbetrieb B ist nicht netzfrequent. Die Verwendung dieser Widerstandseinheit 14 verlangt eine abgeänderte Steuer- und Regeleinrichtung 4, deren Signalflussplan in der FIG 8 näher dargestellt ist.

In der FIG 8 ist ein Signalflussplan einer vorteilhaften Steuer- und Regeleinrichtung 4 des Matrixumrichters 2 dargestellt, die implementiert ist, wenn die Widerstandseinheit 14 nach FIG 7 verwendet wird. Diese unterscheidet sich vom Signalflussplan nach FIG 5 dadurch, dass zunächst eine Steuereinheit 44 verwendet wird, die neben einem Amplituden- und Phasenwinkel-Stelleingang auch noch einen Leistungsfaktor-Stelleingang aufweist. Außerdem ist der Ausgang des Spannungsregelkreises 72, an dem das Steuersignal $S_{PW}$ ansteht, nicht mehr mit dem Steuereingang 24 der Widerstandseinheit 14, sondern mit einem ersten Eingang eines zweiten Umschalters 100 verknüpft. Am zweiten Eingang dieses Umschalters 100 steht ein vorbestimmter Wert $\cos\Phi_{normal}$ als Leistungsfaktor-Stellgröße an, die im Normalbetrieb N dem Leistungsfaktor-Stelleingang der Steuereinheit 44 zugeführt wird. Ferner ist ein Eingang des Addierers 92 des Vektorphasenregelkreises 86 mit einem Ausgang eines dritten Umschalters 124 verbunden, an dessen beiden Eingängen jeweils ein vorbestimmter Frequenzwert $f_{brems}$ und $f_{nenn}$ für den Bremsbetrieb B und den Normalbetrieb N ansteht. Zusätzlich generiert die Ablaufsteuereinrichtung 66 ein Signal $S_{SW}$ für das Schütz 122 der Widerstandseinheit 14 nach FIG 7. Mittels dieses Steuersignals $S_{SW}$ wird bei Netzausfall das Schütz 122 geschlossen, so dass der Widerstand 22 zwischen zwei Eingangs-Phasenleitungen des Matrixumrichters 2 geschaltet ist.

Da hier dieser Widerstand 22 der Widerstandseinheit 14 nicht mittels eines abschaltbaren Halbleiterschalters 20 getaktet wird, ist die Eingangsspannung des Matrixumrichters 4, d.h., der Kondensatorspannungs-

Istraumzeiger $\underline{u}_{Cme\beta}$, im Bremsbetrieb B nicht netzfrequent, sondern eine Gleichspannung. D.h., der Kondensatorspannungs-Istraumzeiger $\underline{u}_{Cme\beta}$ läuft nicht mit der Netzkreisfrequenz $\omega_N$ um, sondern ruht in einer Winkellage.

Die am Widerstand 22 anstehende Spannung wird über die Winkellage des Kondensatorspannungs-Istraumzeigers $\underline{u}_{Cme\beta}$ eingestellt. Wenn dieser Kondensatorspannungs-Istraumzeiger $\underline{u}_{Cme\beta}$ so eingestellt ist, dass die verkettete Spannung der beiden Phasen, zwischen denen der Widerstand 22 geschaltet ist, Null ist, so ist die Spannung am Widerstand 22 ebenfalls Null. Damit wird keine Leistung am Widerstand 22 umgesetzt. Der Betrag des Kondensatorspannungs-Istraumzeigers $\underline{u}_{Cem\beta}$ entspricht in diesem Fall dem Wert der Phasenspannung der dritten Phasenleitung. Wird der Kondensatorspannungs-Istraumzeiger $\underline{u}_{Cme\beta}$ so eingestellt, dass der Wert der Phasenspannung dieser dritten Phasenleitung Null ist, so ist der Wert der verketteten Spannung der beiden anderen Phasen maximal. Dadurch wird am Widerstand 22 auch die maximale Leistung umgesetzt. Damit zwischen diesen beiden Endzuständen kontinuierlich variiert werden kann, wird der Phasenwinkel des Kondensatorspannungs-Istraumzeigers $\underline{u}_{Cme\beta}$, der hier eine Gleichgröße ist, verändert. Dieses Drehen des Kondensatorspannungs-Istraumzeigers $\underline{u}_{Cme\beta}$ geschieht über den Ausgangswert des Spannungsregelkreises 72, der im Bremsbetrieb B am Leistungsfaktor-Stelleingang der Steuereinheit 44 ansteht. Mittels dieses Stelleingangs wird der eingangsseitige Blindstrom $i_\mu$ des Matrixumrichters 2 und damit das Drehen des Kondensatorspannungs-Istraumzeigers $\underline{u}_{Cem\beta}$ bewirkt. Gleichzeitig wird im Bremsbetrieb B der Drehzahl-Sollwert n* rampenförmig auf Null gefahren. Wenn der Motor 16 steht, wird der Antrieb abgeschaltet.

Da die Widerstandseinheit 14 nur einen zuschaltbaren Widerstand 22 aufweist und die Steuer- und Regeleinrichtung 4 eines bekannten Matrixumrichters 2 nur wenig modifiziert werden muss, handelt es sich hier um eine bevorzugte Ausführungsform zum Stillsetzen eines Antriebs mit einem Matrixumrichters 2 bei Netzausfall.

Mit dem erfindungsgemäßen Verfahren eröffnen sich nun für den Matrixumrichter 2 Antriebsapplikationen, die bisher wegen der Voraussetzung des Stillsetzens des Antriebs bei Netzausfall verschlossen waren. Somit entspricht nun ein Matrixumrichter mit dem erfindungsgemäßen Verfahren und einer Widerstandseinheit 14 einem Spannungszwischenkreis-Umrichter mit Pulswiderstand.

## Patentansprüche

1. Verfahren zum Stillsetzen eines Antriebs mit einem Matrixumrichter (2) bei Netzausfall mit mehreren netzseitigen Kommutierungskondensatoren (C1,C2,C3), einer netzseitigen Schaltereinheit (10) und einer Widerstandseinheit (14) mit wenigstens einem Widerstand (22, $22_1$, $22_2$, $22_3$), einem abschaltbaren Halbleiterschalter (20, $20_1$, $20_2$) und einer Diodeneinrichtung (D1, D2, D3, D1', D2', D3'), wobei bei einem ermittelten Netzausfall der Matrixumrichter (2) umgehend vom speisenden Netz (12) getrennt wird, wobei der abschaltbare Halbleiterschalter (20, $20_1$, $20_2$) der Widerstandseinheit (14) derart getaktet wird, dass die Amplitude ($U_c$) eines ermittelten Kondensatorspannungs-Istraumzeigers ($\underline{u}_{Cme\beta}$) gleich einem vorbestimmten Wert ($u_{nenn}$) ist, und wobei ein Drehzahl-Sollwert (n*) auf Null gesteuert wird.

2. Verfahren zum Stillsetzen eines Antriebs mit einem Matrixumrichters (2) bei Netzausfall mit mehreren netzseitigen Kommutierungskondensatoren (C1,C2,C3), einer netzseitigen Schaltereinheit (10) und einer Widerstandseinheit (14), bestehend aus einer Reihenschaltung eines Widerstandes (22) und eines Schützes (122), wobei bei einem ermittelten Netzausfall der Matrixumrichter (2) umgehend vom speisenden Netz (12) getrennt wird, wobei der Widerstand (22) der Widerstandseinheit dem Matrixumrichter (2) (14) zugeschaltet wird, wobei der Phasenwinkel ($\gamma_c$) eines ermittelten Kondensatorspannungs-Istraumzeigers ($\underline{u}_{Cme\beta}$) derart gesteuert wird, dass die Amplitude einer am Widerstand (22) der Widerstandseinheit (14) anstehenden Spannung maximal wird, und wobei ein Drehzahl-Sollwert (n*) auf Null gesteuert wird.

3. Verfahren nach Anspruch 1, **dadurch gekennzeichnet, dass** aus gemessenen Kondensatorspannungen ($u_{C1}$,$u_{C2}$,$u_{C3}$) zwei orthogonale Spannungskomponenten ($u_{C\alpha}$, $u_{C\beta}$) eines Kondensatorspannungs-Istraumzeigers ($\underline{u}_{Cme\beta}$) gebildet werden, aus denen mit Hilfe eines geglätteten Phasenwinkels ($\gamma_c$) dieses Kondensatorspannungs-Istraumzeigers ($\underline{u}_{Cme\beta}$) dessen Amplitude ($u_C$) und Phasenwinkel ($\gamma_C$) bestimmt werden, wobei dieser Phasenwinkel ($\gamma_C$) in Abhängigkeit eines Nennwertes ($f_{nenn}$) der Netzfrequenz ($f_N$) geglättet wird.

4. Verfahren nach Anspruch 1 oder 2, **dadurch gekennzeichnet, dass** aus gemessenen Phasenspannungen ($u_{N1}$, $u_{N2}$, $u_{N3}$) zwei orthogonale Spannungskomponenten ($u_{N\alpha}$, $u_{N\beta}$) eines Netzspannungs-Istraumzeigers ($\underline{u}_{netzme\beta}$) gebildet werden, die anschließend in polare Komponenten ($u_{netz\,me\beta}$, $\gamma_{netz}$) gewandelt werden, dass die Amplitude ($u_{netz\,me\beta}$) des so ermittelten Netzspannungs-Istraumzeigers ($\underline{u}_{netzme\beta}$) mit einem Amplituden-Sollwert ($u_{Nenn}$) verglichen wird und eine festgestellte Abweichung ($\Delta u_{netz}$) für die Umschaltung von Normal- in Bremsbetrieb (N,B) ausgewertet wird, und dass der Phasenwinkel ($\gamma_{netz}$) des ermittelten Netzspannungs-Istraumzeigers ($\underline{u}_{netzme\beta}$) mittels eines

Nennwertes ($f_{nenn}$) der Netzfrequenz ($f_N$) geglättet wird.

5. Verfahren nach Anspruch 1 und 3, **dadurch gekennzeichnet, dass** die Amplitude ($u_C$) des ermittelten Kondensatorspannungs-Istraumzeigers ($\underline{u}_{Cme\beta}$) mit einer Amplitude ($u_{netz}$) verglichen wird und eine festgestellte Abweichung ($\Delta u_C$) derart zur Taktung der Widerstandseinheit (14) verwendet wird, dass diese zu Null wird.

6. Verfahren nach Anspruch 2, **dadurch gekennzeichnet, dass** aus gemessenen Kondensatorspannungen ($u_{C1}, u_{C2}, u_{C3}$) zwei orthogonale Spannungskomponenten ($u_{C\alpha}, u_{C\beta}$) eines Kondensatorspannungs-Istraumzeigers ($\underline{u}_{Cme\beta}$) gebildet werden, die anschließend in polare Komponenten ($u_C$, $\gamma_C$) gewandelt werden, dass die Amplitude ($u_C$) des ermittelten Kondensatorspannungs-Istraumzeigers ($\underline{u}_{Cme\beta}$) mit einer Amplitude ($u_{-netz}$) verglichen wird und eine festgestellte Abweichung ($\Delta u_C$) derart zur Drehung des Kondensatorspannungs-Istraumzeigers ($\underline{u}_{Cme\beta}$) verwendet wird, dass diese zu Null wird.

7. Vorrichtung zur Durchführung des Verfahrens nach Anspruch 1 mit einer Schaltereinheit (10) und einer Widerstandseinheit (14), wobei diese Vorrichtung jeweils eine Einrichtung (78,52) zur Erfassung eines Kondensatorspannungs- und Netzspannungs-Istraumzeigers ($\underline{u}_{Cme\beta}$, $\underline{u}_{netzme\beta}$), einen Spannungsregelkreis (72), einen Umschalter (68), eine Netzspannungsüberwachungseinrichtung (58) und eine Ablaufsteuereinrichtung (66) aufweist, der Spannungsregelkreis (72) eingangsseitig jeweils mit einem Amplitudenausgang der Einrichtungen (78,52) zur Erfassung eines Kondensatorspannungs- und eines Netzspannungs-Istraumzeigers ($\underline{u}_{Cme\beta}, \underline{u}_{netzme\beta}$) verbunden ist und ausgangsseitig mit einem Steuereingang (24) der Widerstandseinheit (14) verbunden ist, und die Ablaufsteuereinrichtung (66) eingangsseitig mit der Netzspannungsüberwachungseinrichtung (58) verbunden ist, die eingangsseitig mit einem Amplitudenausgang der Einrichtung (52) zur Erfassung eines Netzspannungs-Istraumzeigers ($\underline{u}_{netzme\beta}$) verknüpft ist und ausgangsseitig mit einem Steuereingang des Umschalters (68) und mit einem Steuereingang der Schaltereinheit (10) verbunden ist, und der Ausgang des Umschalters (68) mittels eines Rampengebers (94) mit einem Sollwert-Eingang eines Drehzahlregelkreises (46) der Steuer- und Regeleinrichtung (4) des Matrixumrichters (2) verknüpft ist.

8. Vorrichtung zur Durchführung des Verfahrens nach Anspruch 2 mit einer Schaltereinheit (10) und einer Widerstandseinheit (14), wobei diese Vorrichtung jeweils eine Einrichtung (78,52,96) zur Erfassung eines Kondensatorspannungs-, eines Netzspannungs- und eines Netzstrom-Istraumzeigers ($\underline{u}_{Cme\beta}$, $\underline{u}_{netzme\beta}$, $\underline{i}_{netzme\beta}$), einen Spannungsregelkeis (72), einen ersten und zweiten Umschalter (68,100), eine Netzspannungsüberwachungseinrichtung (58) und eine Ablaufsteuereinrichtung (66) aufweist, der Spannungsregelkreis (72) eingangsseitig jeweils mit einem Amplitudenausgang der Einrichtungen (78,52) zur Erfassung eines Kondensatorspannungs- und eines Netzspannungs-Istraumzeigers ($\underline{u}_{Cme\beta}$, $\underline{u}_{netzme\beta}$) verbunden ist und ausgangsseitig ($S_{PW}$) mittels des zweiten Umschalters (100) mit einem Steuereingang einer Steuereinheit (44) der Steuer- und Regeleinrichtung (4) des Matrixumrichters (2) verknüpft ist, der erste Umschalter (68) ausgangsseitig mittels eines Rampengebers (94) mit einem Sollwert-Eingang eines Drehzahlregelkreises (46) der Steuer- und Regeleinrichtung (4) des Matrixumrichters (2) verbunden ist, und die Ablaufsteuereinrichtung (66) eingangsseitig mit der Netzspannungsüberwachungseinrichtung (58), die eingangsseitig mit einem Amplitudenausgang der Einrichtung (52) zur Erfassung eines Netzspannungs-Istraumzeigers ($\underline{u}_{netzme\beta}$) verknüpft ist und ausgangsseitig jeweils mit einem Steuereingang der beiden Umschalter (68,100) verbunden ist.

9. Vorrichtung nach Anspruch 7, **dadurch gekennzeichnet, dass** die Widerstandseinheit (14) eine Reihenschaltung (18) eines abschaltbaren Halbleiterschalters (20) und eines Widerstandes (22) aufweist, deren Anschlüsse jeweils mit Dioden (D1,D2,D3,D1',D2',D3') verknüpft sind, die anoden- bzw. kathodenseitig mit einer Phasenleitung des Matrixumrichters (2) verbunden sind.

10. Vorrichtung nach Anspruch 7, **dadurch gekennzeichnet, dass** die Widerstandseinheit (14) drei Widerstände ($22_1, 22_2, 22_3$), einen abschaltbaren Halbleiterschalter (20) und mehrere Dioden (D1,D2,D3,D1',D2',D3') aufweist, wobei diese Widerstände ($22_1, 22_2, 22_3$) einerseits mit einer Phasenleitung des Matrixumrichters (2) und andererseits mittels der Dioden (D1,D2,D3 bzw. D1',D2',D3') mit einem Anschluss des Halbleiterschalters (20) verknüpft sind.

11. Vorrichtung nach Anspruch 8, **dadurch gekennzeichnet, dass** die Widerstandseinheit (14) eine Reihenschaltung eines Widerstandes (22) und eines Schützes (122) aufweist.

12. Vorrichtung nach einem der Ansprüche 7, 9 und 10, **dadurch gekennzeichnet, dass** die Einrichtung (78) zur Erfassung des Kondensatorspannungs-Istraumzeigers ($\underline{u}_{Cem\beta}$) einen Koordinatenwandler (80) mit nachgeschaltetem Vektordreher (82) aufweist.

**13.** Vorrichtung nach einem der Ansprüche 7 bis 11, **dadurch gekennzeichnet, dass** die Einrichtung (52) zur Erfassung des Netzspannungs-Istraumzeigers ($\underline{u}_{netzme\beta}$) zwei in Reihe geschaltete Koordinatenwandler (54,56) aufweist.

**14.** Vorrichtung nach einem der Ansprüche 7 bis 11, **dadurch gekennzeichnet, dass** dem Amplituden-Ausgang der Einrichtung (78) zur Erfassung eines Kondensatorspannungs-Istraumzeigers ($\underline{u}_{Cme\beta}$) eine Glättungseinrichtung (84) nachgeschaltet ist.

**15.** Vorrichtung nach einem der Ansprüche 7 bis 11, **dadurch gekennzeichnet, dass** dem Phasenwinkel-Ausgang der Einrichtung (52) zur Erfassung eines Netzspannungs-Istraumzeigers ($\underline{u}_{netzme\beta}$) ein Vektorphasenregelkreis (108) nachgeschaltet ist.

**16.** Vorrichtung nach einem der Ansprüche 7 bis 15, **dadurch gekennzeichnet, dass** diese Vorrichtung Bestandteil der Steuer- und Regeleinrichtung (4) des Matrixumrichters (2) ist.

**17.** Vorrichtung nach einem der Ansprüche 7 bis 15, **dadurch gekennzeichnet, dass** diese Vorrichtung ein Signalprozessor ist.

**Claims**

**1.** A method for shutting down a drive with a matrix converter (2) during a power outage, with a plurality of power input side commutation capacitors (C1, C2, C3), a power line switching unit (10), and a resistor unit (14) with at least one resistor (22, $22_1$, $22_2$, $22_3$), a turn-off semi conductor switch ($20, 20_1, 20_2$) and a diode (D1, D2, D3, D1', D2', D3'), whereby with a measured power outage, the matrix converter (2) is immediately disconnected from the power supply (12), with the turn-off semi conductor switch ($20, 20_1, 20_2$) of the resistor unit (14) being pulsed such that the amplitude ($U_c$) of a measured actual capacitor voltage space vector ($\underline{u}_{Cmess}$) is equal to a predetermined value ($u_{nenn}$) and with a desired rotation speed value ($n^*$) being regulated towards zero.

**2.** The method for shutting down a drive with a matrix converter (2) during a power outage with a plurality of power line commutation capacitors (C1, C2, C3), a power line switching unit (10) and a resistor unit (14), comprising a series connection of a resistor (22) and of a contactor (122), whereby with a measured power outage of the matrix converter (2), the matrix converter (2) is immediately disconnected from the power supply (12), with the resistor (22) of the resistor unit (14) being arranged upstream of the matrix converter (2), with the phase angle ($\gamma_c$) of a measured actual capacitor voltage space vector ($\underline{u}_{Cmess}$)

being controlled such that the amplitude of a voltage applied to the resistor (22) of the resistor unit (14) is maximum and with a desired rotation speed value ($n^*$) being controlled towards zero.

**3.** The method according to claim 1, **characterised in that** two orthogonal voltage components ($u_{c\alpha}, u_{c\beta}$) of an actual capacitor voltage space vector ($\underline{u}_{Cmess}$) are formed from measured capacitor voltages ($u_{c1}, u_{c2}, u_{c3}$), from which orthogonal voltage components ($u_{c\alpha}, u_{c\beta}$), this actual capacitor voltage space vector ($\underline{u}_{Cmess}$), its amplitude ($U_c$) and phase angle ($\gamma_c$) are determined with the aid of a smoothed phase angle, with this phase angle ($\gamma_c$) being smoothed as a function of a nominal value ($f_{nenn}$) of the power line frequency ($f_N$).

**4.** The method according to claim 1 or 2, **characterised in that** two orthogonal voltage components ($u_{N\alpha}, u_{N\beta}$) of an actual power line voltage space vector ($\underline{u}_{netzmess}$) are formed from measured phase voltages ($u_{N1}, u_{N2}, u_{N3}$), said orthogonal voltage components ($u_{N\alpha}, u_{N\beta}$) subsequently being converted into polar components ($u_{netz\,mess}, y_{netz}$) such that the amplitude ($u_{netz\,mess}$) of the actual power line voltage space vector ($\underline{u}_{netzmess}$) determined in this way is compared with an desired amplitude value (($u_{Nenn}$) and a determined variation ($\Delta u_{netz}$) for the switching from normal to braking operation (N, B) is evaluated and that the phase angle ($\gamma_{netz}$) of the determined actual power line voltage space vector ($\underline{u}_{netzmess}$) is smoothed by means of a nominal value ($f_{nenn}$) of the power line frequency ($f_N$).

**5.** The method according to claim 1 and 3, **characterised in that** the amplitude ($U_c$) of the measured actual capacitor voltage space vector ($\underline{u}_{Cmess}$) is compared with an amplitude ($u_{netz}$) and a determined variation ($\Delta u_c$) is used to pulse the resistor unit (14), such that this becomes zero.

**6.** The method according to claim 2, **characterised in that** two orthogonal voltage components ($u_{c\alpha}, u_{c\beta}$) of an actual capacitor voltage space vector ($\underline{u}_{Cmess}$) are formed from measured capacitor voltages ($u_{c1}, u_{c2}, u_{c3}$), said orthogonal voltage components ($u_{c\alpha}, u_{c\beta}$) finally being converted into polar components ($u_c, \gamma_c$), **in that** the amplitude ($U_c$) of the measured actual capacitor voltage space vector ($\underline{u}_{Cmess}$) is compared with an amplitude ($u_{netz}$) and a determined variation ($\Delta u_c$) is used to rotate the actual capacitor voltage space vector ($\underline{u}_{Cmess}$), such that it becomes zero.

**7.** The device for implementing the method according to claim 1, with a switching unit (10) and a resistor unit (14), with this device comprising a device (78, 52) in each instance for measuring an actual capacitor voltage space vector and an actual power line voltage space vector ($\underline{u}_{Cmess}, \underline{u}_{netzmess}$), a voltage control circuit (72), a switch (68), a power line voltage monitoring device (58) and a sequence controller (66), the voltage control circuit (72) being connected on the input side to an amplitude output of the devices (78, 52) in order to measure an actual capacitor voltage space vector and an actual power line voltage space vector ($\underline{u}_{Cmess}, \underline{u}_{netzmess}$) and being connected on the output side with a control input (24) of the resistor unit (14) and the sequence controller (66) being connected on the input side to the power line voltage monitoring device (58), which is connected on the input side to the amplitude output of the device (52) in order to measure an actual power line voltage space vector ($\underline{u}_{netzmess}$) and is connected on the output side with a control input of the switch (68) and with a control input of the circuit unit (10) and the output of the switch (68) is connected to a desired input of a rotation speed control circuit (46) of the controller (4) of the maximum converter (2) by means of a ramp generator (94).

8. The device for implementing the method according to claim 2, with a switching unit (10) and a resistor unit (14), with this device comprising respectively a device (78, 52, 96) for measuring a capacitor voltage, an actual power line voltage space vector and an actual power line current space vector ($\underline{u}_{Cmess}, \underline{u}_{netzmess}, \underline{i}_{netzmess}$), a voltage control circuit (72), a first and second switch (68, 100), a power line voltage monitoring device (58) and a sequence controller (66), the voltage control circuit (72) is connected on the input side to an amplitude output of the devices (78, 52) in order to detect a capacitor voltage and an actual power line voltage space vector ($\underline{u}_{Cmess}, \underline{u}_{netzmess}$), and is linked on the output side ($S_{pw}$) to a control input of a control unit (44) of the controller (4) of the matrix converter (2) by means of the second switch (100), the first switch (68) is connected on the output side to a desired input of a rotation speed control circuit (46) of the controller (4) of the matrix converter (2) by means of a ramp giver (94) and the sequence controller (66) is connected on the input side to the power line voltage monitoring device (58), which is connected on the input side with an amplitude output of the device (52) in order to detect an actual power line voltage space vector ($\underline{u}_{netzmess}$) and is connected on the output side in each instance to a control input of the two switches (68, 100).

9. The device according to claim 7, **characterised in that** the resistor unit (14) comprises a series connection (18) of a turn-off semi conductor switch (20) and a resistor (22), the terminals of which are each connected to diodes (D1, D2, D3, D1', D2', D3'), the anode and/or cathode sides being connected to a phase conductor of the matrix converter (2).

10. The device according to claim 7, **characterised in that** the resistor unit (14) comprises three resistors ($22_1$, $22_2$, $22_3$), a turn-off semiconductor switch (20) and a plurality of diodes (D1, D2, D3, D1', D2', D3'), with these resistors ($22_1$, $22_2$, $22_3$) being connected on the one hand with a phase conductor of the matrix converter(2) and on the other hand with a terminal of the semi conductor switch (20) by means of the diodes (D1, D2, D3, D1', D2', D3').

11. The device according to claim 8 **characterised in that** the resistor unit (14) comprises a series connection of a resistor (22) and a contactor (122).

12. The device according to one of claims 7, 9, 10, **characterised in that** the device (78) for measuring the actual capacitor voltage space vector ($\underline{u}_{Cmess}$) comprises a coordinate transformer (80) with a vector rotator (82) arranged downstream thereof.

13. Device according to one of claims 7 to 11, **characterised in that** the device (52) comprises two coordinate transformers (54, 56) connected in series, in order to measure the actual power line voltage space vector ($\underline{u}_{netzmess}$).

14. Device according to one of claims 7 to 11, **characterised in that** a smoothing device (84) is arranged downstream of the amplitude output of the device (78) in order to measure an actual capacitor voltage space vector ($\underline{u}_{Cmess}$).

15. Device according to one of claims 7 to 11, **characterised in that** a vector phase control circuit (108) is arranged downstream of the phase angle output of the device (52) in order to measure an actual power line voltage space vector ($\underline{u}_{netzmess}$).

16. Device according to one of claims 7 to 15, **characterised in that** this device is an integral part of the controller (4) of the matrix converter (2).

17. Device according to one of claims 7 to 15, **characterised in that** this device is a signal processor.

## Revendications

1. Procédé pour arrêter un système d'entraînement avec un convertisseur matriciel (2) en cas de panne de réseau, comprenant avec plusieurs condensateurs de commutation (C1, C2, C3) côté réseau, une unité formant interrupteur (10) côté réseau et une unité formant résistance (14) côté réseau ayant au moins une résistance ($22, 22_1, 22_2, 22_3$), un commutateur semi-conducteur interruptible ($20, 20_1, 20_2$) et un dispositif de diodes (D1, D2, D3, D1', D2', D3'), le convertisseur matriciel (2) étant immédiatement coupé du réseau d'alimentation (12) lorsqu'une panne de réseau est constatée, le commutateur semi-conducteur interruptible ($20, 20_1, 20_2$) de l'unité formant résistance (14) étant cadencé de telle sorte que l'amplitude ($U_C$) d'un vecteur spatial réel de tension de condensateur déterminé ($\underline{u}_{Cmess}$) est égal à une valeur prédéterminée ($u_{nenn}$) et une valeur de consigne de vitesse de rotation (n*) étant commandée à zéro.

2. Procédé pour arrêter un système d'entraînement avec un convertisseur matriciel (2) en cas de panne de réseau comprenant plusieurs condensateurs de commutation (C1, C2, C3) côté réseau, une unité formant interrupteur (10) côté réseau et une unité formant résistance (14) constituée d'un montage en série d'une résistance (22) et d'un disjoncteur (122), le convertisseur matriciel (2) étant immédiatement coupé du réseau d'alimentation (12) lorsqu'une panne de réseau est constatée, la résistance (22) de l'unité formant résistance (14) étant mise en circuit avec le convertisseur matriciel (2), l'angle de phase ($\gamma_C$) d'un vecteur spatial réel de tension de condensateur déterminé ($\underline{u}_{Cmess}$) étant commandé de telle sorte que l'amplitude d'une tension présente à la résistance (22) de l'unité formant résistance (14) est maximale et une valeur de consigne de vitesse de rotation (n*) étant commandée à zéro.

3. Procédé selon la revendication 1, **caractérisé par le fait que** l'on forme à partir de tensions de condensateur mesurées ($u_{C1}$, $u_{C2}$, $u_{C3}$) deux composantes de tension orthogonales ($u_{C\alpha}$, $u_{C\beta}$) d'un vecteur spatial réel de tension de condensateur ($\underline{u}_{Cmess}$) à partir desquelles, à l'aide d'un angle de phase lissé ($\gamma_C$) de ce vecteur spatial réel de tension de condensateur ($\underline{u}_{Cmess}$), on détermine son amplitude ($u_C$) et son angle de phase ($\gamma_C$), cet angle de phase ($\gamma_C$) étant lissé en fonction d'une valeur nominale ($f_{nenn}$) de la fréquence de réseau ($f_N$).

4. Procédé selon la revendication 1 ou 2, **caractérisé par le fait que**, à partir des tensions de phase mesurées ($u_{N1}$, $U_{N2}$, $u_{N3}$), on forme deux composantes de tension orthogonales ($u_{N\alpha}$, $u_{N\beta}$) d'un vecteur spatial réel de tension de réseau ($\underline{u}_{netzmess}$) qui sont ensuite transformées en composantes polaires ($u_{netzmess}$, $\gamma_{netz}$), que l'on compare l'amplitude ($u_{netzmess}$) du vecteur spatial réel de tension de réseau ainsi déterminé ($\underline{u}_{netzmess}$) à une valeur de consigne d'amplitude ($u_{nenn}$) et on évalue un écart constaté ($\Delta u_{netz}$) pour la commutation du fonctionnement normal au fonctionnement de freinage (N, B) et que l'on lisse l'angle de phase ($\gamma_{netz}$) du vecteur spatial réel de tension de réseau déterminé ($\underline{u}_{netzmess}$) au moyen d'une valeur nominale ($f_{nenn}$) de la fréquence de réseau ($f_N$).

5. Procédé selon les revendications 1 et 3, **caractérisé par le fait que** l'on compare l'amplitude ($u_C$) du vecteur spatial réel de tension de condensateur déterminé ($\underline{u}_{Cmess}$) à une amplitude ($u_{netz}$) et que l'on utilise un écart constaté ($\Delta u_C$) de telle sorte pour la commande de la cadence de l'unité formant résistance (14) que cet écart devient nul.

6. Procédé selon la revendication 2, **caractérisé par le fait que** l'on forme à partir de tensions de condensateur mesurées ($u_{C1}$, $u_{C2}$, $u_{C3}$) deux composantes de tension orthogonales ($u_{C\alpha}$, $u_{C\beta}$) d'un vecteur spatial réel de tension de condensateur ($\underline{u}_{Cmess}$) qui sont ensuite transformées en composantes polaires ($u_C$, $\gamma_C$), que l'on compare l'amplitude ($u_C$) du vecteur spatial réel de tension de condensateur déterminé ($\underline{u}_{Cmess}$) à une amplitude ($u_{netz}$) et que l'on utilise un écart constaté ($\Delta u_C$) de telle sorte pour la rotation du vecteur spatial réel de tension de condensateur ($\underline{u}_{Cmess}$) que cet écart devient nul.

7. Dispositif pour la mise en oeuvre du procédé selon la revendication 1 comprenant une unité formant interrupteur (10) et une unité formant résistance (14), ce dispositif comportant un dispositif (78, 52) pour la détection d'un vecteur spatial réel de tension de condensateur et d'un vecteur spatial réel de tension de réseau ($\underline{u}_{Cmess}$, $\underline{u}_{netzmess}$), un circuit de régulation de tension (72), un commutateur (68), un dispositif de surveillance de tension de réseau (58) et un dispositif de commande séquentielle (66), le circuit de régulation de tension (72) étant relié en entrée à chaque fois à une sortie d'amplitude des dispositifs (78, 52) pour la détection d'un vecteur spatial réel de tension de condensateur et d'un vecteur spatial réel de tension de réseau ($\underline{u}_{Cmess}$, $\underline{u}_{netzmess}$) et en sortie à une entrée de commande (24) de l'unité formant résistance (14), le dispositif de commande séquentielle (66) étant relié en entrée au dispositif de surveillance de tension de réseau (58), qui est relié en entrée à une sortie d'amplitude du dispositif (52) pour la détection d'un vecteur spatial réel de tension de réseau ($\underline{u}_{netzmess}$), et en sortie à une entrée de commande du commutateur (68) et à une entrée de commande de l'unité formant interrupteur (10) et la sortie du commutateur (68) étant reliée au moyen d'un générateur de rampe (94) à une entrée de valeur de consigne d'un circuit de régulation de vitesse de rotation (46) du dispositif de commande et de régulation (4) du convertisseur matriciel (2).

8. Dispositif pour la mise en oeuvre du procédé selon la revendication 2 comprenant une unité formant interrupteur (10) et une unité formant résistance (14), ce dispositif comportant respectivement un dispositif (78, 52, 96) pour la détection d'un vecteur spatial réel de tension de condensateur, d'un vecteur spatial réel de tension de réseau et d'un vecteur spatial réel de courant de réseau ($\underline{u}_{Cmess}$, $\underline{u}_{netzmess}$, $\underline{i}_{netzmess}$), un circuit de régulation de tension (72), un premier et un deuxième commutateur (68, 100), un dispositif de surveillance de tension de réseau (58) et un dispositif de commande séquentielle (66), le circuit de régulation de tension (72) étant relié en entrée à chaque fois à une sortie d'amplitude des dispositifs (78, 52) pour la détection d'un vecteur spatial réel de tension de condensateur et d'un vecteur spatial réel de tension de réseau ($\underline{u}_{Cmess}$, $\underline{u}_{netzmess}$) et en sortie ($S_{PW}$) au moyen du deuxième commutateur (100) à une entrée de commande d'une unité de commande (44) du dispositif de commande et de régulation (4) du convertisseur matriciel (2), le premier commutateur (68) étant relié en sortie au moyen d'un générateur de rampe (94) à une entrée de valeur de consigne d'un circuit de régulation de vitesse de rotation (46) du dispositif de commande et de régulation (4) du convertisseur matriciel (2) et le dispositif de commande séquentielle (66) étant relié en entrée au dispositif de surveillance de tension de réseau (58), qui est relié en entrée à une sortie d'amplitude du dispositif (52) pour la détection d'un vecteur spatial réel de tension de réseau ($\underline{u}_{netzmess}$), et en sortie à chaque fois à une entrée de commande des deux commutateurs (68, 100).

9. Dispositif selon la revendication 7, **caractérisé par le fait que** l'unité formant résistance (14) comporte un montage en série (18) qui est composé d'un commutateur semi-conducteur interruptible (20) et d'une résistance (22) et dont les bornes sont reliées à chaque fois à des diodes (D1, D2, D3, D1', D2', D3') qui sont reliées côté anode respectivement côté cathode à un conducteur de phase du convertisseur matriciel (2).

10. Dispositif selon la revendication 7, **caractérisé par le fait que** l'unité formant résistance (14) comporte trois résistances ($22_1$, $22_2$, $22_3$), un commutateur semi-conducteur interruptible (20) et plusieurs diodes (D1, D2, D3, D1', D2', D3'), ces résistances ($22_1$, $22_2$, $22_3$) étant reliées d'une part à un conducteur de phase du convertisseur matriciel (2) et d'autre part au moyen des diodes (D1, D2, D3 respectivement D1', D2', D3') à une borne du commutateur semi-conducteur (20).

11. Dispositif selon la revendication 8, **caractérisé par le fait que** l'unité formant résistance (14) comporte un montage en série d'une résistance (22) et d'un disjoncteur (122).

12. Dispositif selon l'une des revendications 7, 9 et 10, **caractérisé par le fait que** le dispositif (78) pour la détection du vecteur spatial réel de tension de condensateur ($\underline{u}_{Cmess}$) comporte un transformateur de coordonnées (80) avec dispositif de rotation de vecteur (82) placé du côté aval.

13. Dispositif selon l'une des revendications 7 à 11, **caractérisé par le fait que** le dispositif (52) pour la détection d'un vecteur spatial réel de tension de réseau ($\underline{u}_{netzmess}$) comporte deux transformateurs de coordonnées (54, 56) branchés en série.

14. Dispositif selon l'une des revendications 7 à 11, **caractérisé par le fait qu'**un dispositif de lissage (84) est branché du côté aval de la sortie d'amplitude du dispositif (78) pour la détection d'un vecteur spatial réel de tension de condensateur ($\underline{u}_{Cmess}$).

15. Dispositif selon l'une des revendications 7 à 11, **caractérisé par le fait qu'**un circuit de régulation de phase de vecteur (108) est branché du côté aval de la sortie d'angle de phase du dispositif (52) pour la détection d'un vecteur spatial réel de tension de réseau ($u_{netzmess}$).

16. Dispositif selon l'une des revendications 7 à 15, **caractérisé par le fait que** ce dispositif fait partie du dispositif de commande et de régulation (4) du convertisseur matriciel (2).

17. Dispositif selon l'une des revendications 7 à 15, **caractérisé par le fait que** ce dispositif est un processeur de signal.

FIG 1

EP 1 407 538 B1

FIG 2

FIG 3

FIG 4

FIG 5

**FIG 6A**

**FIG 6B**

**FIG 6**

**FIG 6A**

$n^{**}=0$ — 68 — 94 — $n^*$ — 50 — 48 — 46 — $m^*$ — 42 — 44 — 18 — S

$n^{**}$ — N

$\underline{u}^*_{motor}$

$\dot{n}_{meß}$

74 — $u_C$ — 72

$u_{netz\,meß}$ — B — 70 — $S_{PW}$

$u_{cmeß}$

$u_{C3}$ — $u_C$ — $u_C$ — 84

$u_{C2}$ — 3 / 2 — $u_C$ — D ( ) — $u_C$

$u_{C1}$

80 — 82 — N — 88 — 86

78 — C — 90 — 92 — $f_{nenn}$ — C

$u_{netz}$ — 66 — N — B

$S_{US}$

FIG 6B

**FIG 7**

32

34

14

36

122

22

$S_{SW}$

24

26

28

30

FIG 8